(19) Europäisches Patentamt
European Patent Office
Office européen des brevets

(11) EP 0 658 584 B1

(12) EUROPÄISCHE PATENTSCHRIFT

(45) Veröffentlichungstag und Bekanntmachung des Hinweises auf die Patenterteilung:
**22.05.2002 Patentblatt 2002/21**

(51) Int Cl.$^7$: **C08G 59/10**, C08G 59/12, C09J 163/00

(21) Anmeldenummer: **94119406.0**

(22) Anmeldetag: **08.12.1994**

(54) **Elastisches Epoxidharz-Härter-System**

Epoxy resin-hardener system having elastic properties

Système résine époxide-durcisseur ayant des propriétés élastiques

(84) Benannte Vertragsstaaten:
**DE**

(30) Priorität: **15.12.1993 DE 4342721**

(43) Veröffentlichungstag der Anmeldung:
**21.06.1995 Patentblatt 1995/25**

(73) Patentinhaber: **Solutia Germany GmbH & Co. KG
55252 Mainz-Kastel (DE)**

(72) Erfinder:
- **Marten, Manfred
D-55126 Mainz (DE)**
- **Wehner, Bernhard
D-65606 Villmar (DE)**

(74) Vertreter: **Zounek, Nikolai, Dipl.-Ing.
Patentanwaltskanzlei Zounek,
Industriepark Kalle Albert,
Gebäude H391
Rheingaustrasse 190-196
65174 Wiesbaden (DE)**

(56) Entgegenhaltungen:
**EP-A- 0 109 174**
**EP-A- 0 387 418**
**EP-A- 0 166 906**
**US-A- 4 423 170**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Epoxidharze, insbesondere solche, die aus Bisphenol A und Epichlorhydrin hergestellt werden, sind bekannte Rohstoffe für die Herstellung von qualitativ hochwertigen Gießharzen, Beschichtungsmassen und Klebstoffen. Diese zum Beispiel mit Polyaminen gehärteten aromatischen Epoxidharze besitzen neben guter Chemikalien- und Lösungsmittelbeständigkeit eine gute Haftfestigkeit auf vielen Untergründen. Häufig ist die Anwendbarkeit dieser Harz/Härter-Systeme jedoch begrenzt durch eine unzureichende Elastizität bzw. Flexibilität im vernetzten Zustand. Insbesondere für Anwendungen, bei denen Temperaturwechselbelastungen durch eine hohe Dehnbarkeit der Beschichtungsstoffe aufgefangen werden müssen, reicht die Elastizität der unmodifizierten Standardepoxidharzsysteme nicht aus. Auf dem Klebstoffsektor werden Epoxidharzsysteme benötigt, die noch bei tiefen Temperaturen, d. h. unter 0 °C, ausreichend elastisch sind. Beispielsweise werden in der Automobilindustrie Epoxidharzklebstoffe verwendet, die in ausgehärtetem Zustand nur wenig flexibel sind. Die mit ihnen erhaltenen Verklebungen weisen zwar eine hohe Zugscherfestigkeit auf, platzen aber bei seitlichem Angriff durch Abschälen leicht ab. Es ist ein bekanntes Problem, daß Klebstoffe, mit denen sich hohe Zugscherfestigkeiten erzielen lassen, häufig nur eine geringe Winkelschälfestigkeit ergeben.

In der Automobilindustrie wird beim Verkleben von Blechen häufig so vorgegangen, daß der Klebstoff während des Karosserierohbaus auf geölten Blankblechen zunächst warm aufgebracht, aber noch nicht ausgehärtet wird. Beim Abkühlen erstarrt der Klebstoff. Im Fertigungsprozeß werden die vorgefertigten Teile bzw. die Rohkarossen vor der Härtung in einem Ofen zur Entfernung des Walzfettes in Wasch-, Phosphatier- und kataphoretischen Tauchlack-Bädern behandelt. Es besteht daher die Forderung nach Klebstoffen, die bereits vor der Aushärtung eine ausreichende Auswaschbeständigkeit aufweisen. Insbesondere muß das gehärtete Klebstoffsystem das Blankblech unter der Klebestelle ausreichend vor Korrosion schützen.

Prinzipiell kann man extern durch Weichmacherzusatz oder intern durch Verringerung der Vernetzungsdichte die Elastizität von Epoxidharzsystemen erhöhen. Externe Elastifizierungsmittel sind jedoch nicht reaktiv und werden nicht in das Duromer-Netzwerk eingebaut. Diese Art der Modifizierung ist auf spezifische Anwendungsgebiete beschränkt, da sie eine Reihe von Nachteilen aufweist. So führen diese Zusätze zu einer starken Störung der Duromerstruktur, sind in ihrem Weichmachungseffekt bei tiefen Temperaturen begrenzt, neigen bei Temperaturbeanspruchung und Alterung zum Ausschwitzen und die gehärteten Systeme verspröden. Zur internen Erhöhung der Elastizität werden mit den Epoxidharzen oder Härtern reagierende Verbindungen zugesetzt, die in die Vernetzung mit einbezogen werden. Im einzelnen wird die elastifizierende Wirkung durch Einbau von langkettigen aliphatischen oder stark verzweigten Zusätzen in die Harz- oder Härterkomponente erreicht.

Bei Vazirani [Adhesives Age, Oct. 1980, S. 31- 35], werden flexible Ein- und Zweikomponenten-Epoxidharzsysteme auf Basis von Polyoxypropylendi- und -triaminen beschrieben. Diese Amine werden kommerziell von der Firma Texaco unter dem Handelsnamen "Jeffamine®" angeboten. Die Härtung des Einkomponentensystems erfolgt mit Dicyandiamid.

Die EP-B 0 354 498 beansprucht einen reaktiven Schmelzklebstoff, der eine Harzkomponente, mindestens einen thermisch aktivierbaren latenten Härter für die Harzkomponente sowie gegebenenfalls Beschleuniger, Füllstoffe, Thixotropiehilfsmittel und weitere übliche Zusatzstoffe enthält. Die Harzkomponente wird durch Umsetzung von

a) einem bei Raumtemperatur festen Epoxidharz und
b) einem bei Raumtemperatur flüssigen Epoxidharz mit
c) einem linearen Polyoxypropylen mit Amino-Endgruppen erhalten.

Es handelt sich dabei um bei Raumtemperatur feste Harze, die zur Weiterverarbeitung über 50 °C erwärmt werden müssen, um die Viskosität so weit zu senken, daß eine Einarbeitung weiterer Bestandteile des Schmelzklebstoffes ermöglicht wird. Bei der Umsetzung der Epoxidharze mit dem linearen Polyoxypropylen mit Amino-Endgruppen ist ein großer Überschuß an Epoxidgruppen, bezogen auf die Aminogruppen, erforderlich, damit es zu einer vollständigen Abreaktion der Aminogruppen kommt. Typischerweise ist ein 5- bis 10-facher Überschuß vorhanden.

In der EP-A 0 387 418 werden Härtungsmittel für Epoxidharze beschrieben, die in einer zweistufigen Reaktion hergestellt werden, wobei in der ersten Stufe Polyalkylenpolyätheramine mit Di- oder Polyepoxidverbindungen zu einem Vorprodukt reagieren, das anschließend mit einem primären oder sekundären Amin zu dem Härter umgesetzt wird.

In der Anmeldung WO 93/00381 wird eine Weiterentwicklung der EP-B 0 354 498 hinsichtlich u. a. verbesserter Tieftemperatureigenschaften beschrieben. Die Aminkomponente besteht darin aus linearen amino-terminierten Polyethylenglykolen oder linearen und/oder trifunktionellen aminoterminierten Polypropylenglykolen.

Aus der US 4,423,170 sind wasserverdünnbare Epoxidharz-Zusammensetzungen bekannt, die aus (A) Diepoxiden, erhalten durch Umsetzung von Diepoxiden und Polyoxyalkylenaminen mit einer Molmasse von 900 bis 2500 g/mol, und (B) einem latenten Härter in wäßrigem Medium bestehen.

Um eine ausreichende Wasserlöslichkeit des Systems zu gewährleisten, müssen die Polyoxyalkylenamine hohe Anteile Ethylenoxid aufweisen. Mit solchen Aminen aufgebaute Epoxidharz-Systeme können keine ausreichenden Korrosionsbeständigkeiten bei Verwendung als Klebstoff, beispielsweise für die Automobilindustrie, erzielt werden.

Gegenstand der EP-B 0 109 174 ist eine Epoxidharz-Zusammensetzung bestehend aus oder enthaltend (A) ein Polyepoxid und (B) ein Aushärtungsmittel, dadurch gekennzeichnet, daß das Polyepoxid mit 50- bis 70 Gew.-% eines Polyoxyalkylenmonoamins mit einer Molmasse von 900 bis 2000 g/mol umgesetzt wurde. Die in dieser EP-B 0 109 174 beschriebene Harz-Härter-Mischung ist in Form eines Ein- oder Zweikomponentensystem brauchbar als flexibler Klebstoff, zeichnet sich durch eine niedrige Viskosität aus und kann deshalb ohne Zugabe von Lösungsmittel verwendet werden. Weiterhin wird festgestellt, daß lediglich eine Serie von Addukten, nämlich die aus Jeffamine M-1000 hergestellten, eine einheitlich niedrige Viskosität unabhängig vom Amingehalt zeigt. Außerdem wird darauf hingewiesen, daß Zusammensetzungen mit weniger als 50 % Polyoxyalkylenmonoamin geringere Flexibilität bei hoher Viskosität und Zusammensetzungen mit mehr als 70 % Polyoxyalkylenmonoamin geringere Adhäsionskraft und abnehmende Viskosität aufweisen.

Aufgabe der vorliegenden Erfindung ist es, reaktive flexible Klebstoffe bereitzustellen, die eine hohe Schälfestigkeit nicht nur bei Raumtemperatur, sondern auch bei tiefen Temperaturen, d. h. von 0 °C und niedriger, aufweisen. Dabei sollen die Zugscherfestigkeitswerte nicht beeinträchtigt werden. Insbesondere ist aber eine ausreichende Auswaschbeständigkeit sowie ein guter Korrosionsschutz des gehärteten Klebstoffsystems zu gewährleisten. Vorteilhaft ist es, wenn die Epoxid-Harze solche Viskositäten aufweisen, die eine leichte Verarbeitung ohne zusätzlichen apparativen Aufwand ermöglichen.

Es wurde nun überraschenderweise gefunden, daß durch Härtung von Epoxidharzen, die durch Umsetzung von 1,2-Epoxiden mit Polyoxyalkylenmonoaminen mit molaren Massen unter 900 g/mol erhalten werden, hervorragend korrosionsbeständige flexible Verklebungen erzielt werden können.

Die vorliegende Erfindung betrifft daher Epoxidharz-Zusammensetzungen enthaltend

(A) Verbindungen, die mindestens zwei 1,2-Epoxidgruppen enthalten, die Umsetzungsprodukte sind aus

A1) Verbindungen mit mindestens zwei 1,2-Epoxidgruppen pro Molekül, sowie eine Mischung aus
A2) Polyoxyalkylenmonoaminen mit einer Molmasse von 500 bis 700 g/mol mit
A3) Polyoxyalkylenmonoaminen mit einer Molmasse von 900 bis 5000 g/mol, wobei die Oxyalkylengruppen in A2) und A3) aus Oxypropylen- und Oxyäthylengruppen, sowie deren Mischungen ausgewählt sind, und/oder
A4) Polycarbonsäuren,

(B) Härtungsmitteln, und

(C) gegebenenfalls üblichen Zusätzen.

Als Epoxidkomponente A1) kommen eine Vielzahl der hierfür bekannten Verbindungen in Betracht, die im Mittel mindestens zwei Epoxidgruppen, vorzugsweise zwei Epoxidgruppen, pro Molekül enthalten. Diese Epoxidverbindungen (Epoxidharze) können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungsoder Reaktionsbedingungen keine störenden Nebenreaktionen verursachen, beispielsweise Alkyl- oder Arylsubstituenten, Äthergruppierungen und ähnliche. Vorzugsweise handelt es sich dabei um Glycidyläther, die sich von mehrwertigen Phenolen, insbesondere Bisphenolen sowie Novolaken ableiten und deren Epoxidäquivalentgewichte zwischen 150 und 500, insbesondere jedoch zwischen 150 und 250 g/mol, liegen.

Die mehrwertigen Phenole sind aromatische Verbindungen mit zwei oder mehreren Hydroxylgruppen. Die aromatischen Verbindungen sind ein- oder mehrkernige Aromaten, oder Verbindungen, in denen mehrere solche Aromaten durch direkte Bindungen oder zweiwertige Gruppen wie z.B. Äther-, Keton-, Sulfid-, Sulfon-, Carbonsäureester- oder Carbonamidgruppen verbunden sind.

Als mehrwertige Phenole sind beispielsweise zu nennen: Resorcin, Hydrochinon, 2,2-Bis-(4'-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4'-hydroxyphenyl)-1,1-äthan, Bis-(4'hydroxyphenyl)-1,1-isobutan, Bis-(4'-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)-äther, Bis-(4-hydroxyphenyl)-sulfon u. a. sowie die Chlorierungs- und Bromierungsprodukte der vorstehend genannten Verbindungen. Ganz besonders bevorzugt werden flüssige Diglycidyläther auf Basis von Bisphenol A mit einem Epoxidäquivalentgewicht von 180 bis 190.

Es können auch Polyglycidyläther von Polyalkoholen verwendet werden, wie z. B. Äthandiol-1,2-diglycidyläther, Propandiol-1,2-diglycidyläther, Propandiol-1,3-diglycidyläther, Butandioldiglycidyläther, Pentandioldiglycidyläther (auch Neopentylglykoldiglycidyläther), Hexandioldiglycidyläther, Diethylenglykoldiglycidyläther, Dipropylenglykoldiglycidyläther, höhere Polyoxyalkylenglykoldiglycidyläther, wie z. B. höhere Polyoxyäthylenglykoldiglycidyläther

und Polyoxypropylenglykoldiglycidyläther, Mischpolyoxyäthylen-propylenglykoldiglycidyläther, Polyoxytetramethylenglykoldiglycidyläther, Polyglycidyläther des Glycerins, Trimethylolpropans, Trimethyloläthans, Pentaerythrits, Sorbits, Polyglycidyläther von oxalkylierten Polyolen (wie z. B. des Glycerins, Trimethylolpropans, Pentaerythrits u. a.), Diglycidyläther des Cyclohexandimethanols, Bis-(4-hydroxycyclohexyl)-methans und 2,2-Bis-(4-hydroxycyclohexyl)propans, Polyglycidyläther des Rizinusöls, Triglycidyltris-(2-hydroxy-äthyl)-isocyanurat. Vorzugsweise werden Polyoxypropylenglykoldiglycidyläther mit einem Epoxidäquivalentgewicht von 150 bis 800, insbesondere von 300 bis 400 g/mol, eingesetzt.

In besonderen Fällen können zusätzlich zu den Polyglycidyläthern geringe Mengen reaktiver Verdünner, wie z. B. Methylglycidyläther, Butylglycidyläther, Allylglycidyläther, Äthylhexylglycidyläther, langkettige aliphatische Glycidyläther, wie z. B. Cetylglycidyläther und Stearylglycidyläther, Monoglycidyläther eines höheren isomeren Alkoholgemisches, Glycidyläther einer Mischung von $C_{12}$ bis $C_{13}$ Alkoholen, Phenylglycidyläther, Kresylglycidyläther, p-t-Butylphenylglycidyläthers, p-Octylphenylglycidyläther, p-Phenyl-phenylglycidyläther, Glycidyläther eines oxalkylierten Laurylalkohols u. a. in Mengen bis zu 30 %, vorzugsweise 10 - 20 %, bezogen auf Polyglycidyläther mitverwendet werden.

Weiterhin kommen in Frage Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl) Verbindungen zählen aber auch Triglycidylisocyanurat, N, N'-Diglycidylderivate von Cycloalkylenharnstoffen und Diglycidylderivate von Hydantoinen u. a.

Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester.

Eine ausführliche Aufzählung der geeigneten Epoxidverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2. Weiterhin sei hier auf die EP-A 272 595 und 286 933 verwiesen.

Es können auch Mischungen von mehreren Epoxidharzen verwendet werden.

Die Polyoxyalkylenmonoamine, die sich besonders brauchbar zur Bildung der Epoxide (A) erwiesen haben, sind Verbindungen der Formel

$$Z - (O - CH_2 - \underset{\displaystyle X}{\underset{|}{CH}})_n - NH_2$$

wobei X Wasserstoff oder ein Methylrest, Z ein Kohlenwasserstoffrest mit 1 bis 5 Kohlenstoffatomen, und n ein Mittelwert ist, der zwischen 2 und 50 liegt.

Bevorzugt werden Polyoxyalkylenmonoamine der Formel

$$Z - (O\text{-}CH_2\text{-}CH_2)_y - [O\text{-}CH_2\text{-}CH(CH_3)]_x - NH_2$$

eingesetzt, in der Z ein Kohlenwasserstoffrest mit 1 bis 5 Kohlenstoffatomen ist, insbesondere ein Methylrest, und unabhängig voneinander y 0 bis 10 und x 1 bis 41 bedeuten.

Als Komponente A2) werden bevorzugt Polyoxyalkylenmonoamine der Formel

$$Z - O - CH_2 - CH_2 - [O\text{-}CH_2\text{-}CH\text{-}(CH_3)]_z\ NH_2$$

in der z 1 bis 15, insbesondere 9, ist, verwendet.

Bevorzugt ist die Komponente A2) ein Polyoxyalkylenmonoamin der Formel

$$CH_3\text{-}O\text{-}CH_2\text{-}CH_2\text{-}[O\text{-}CH_2\text{-}CH\text{-}(CH_3)]_9\text{-}NH_2.$$

In einer anderen bevorzugten Ausführungsform hat die Komponente A2) eine Molmasse von 500 bis 700, vorzugsweise 600 g/mol.

Einige ausgewählte der vorstehend beschriebenen Monoamin-Blockcopolymere mit Oxyäthylen- und Oxypropylengruppen werden z. B. von der Firma Texaco Chemical Co., Inc. unter der Handelsbezeichnung ®Jeffamine M-Serie vertrieben. Besonders erwähnt seien hier die ®Jeffamine-Typen M 600, M 1000, M 2005 und M 2070.

Die gegebenenfalls mitverwendeten Polycarbonsäuren A4) sind vorzugsweise langkettige Dicarbonsäuren. Beispielsweise seien genannt aliphatische Dicarbonsäuren, deren aliphatischer Rest im allgemeinen 1 bis 50, vorzugsweise 2 bis 44 Kohlenstoff-Atome enthält, wie z. B. Bernsteinsäure, Glutarsäure, Adipinsäure, Korksäure, Azelainsäure, Sebacinsäure und Dodecansäure. Geeignete cycloaliphatische Carbonsäuren, deren cycloaliphatischer Rest zumeist 5 bis 12, vorzugsweise 6 bis 8 C-Atome umfaßt, sind z. B. die verschiedenen Cyclohexandicarbonsäure-Isomeren, Hexahydrophthalsäure und Tetrahydrophthalsäure.

Eingesetzt werden bevorzugt dimere Fettsäuren, die aus ein- oder mehrfach ungesättigten natürlichen oder synthetischen einbasischen aliphatischen Fettsäuren mit 16 bis 22 Kohlenstoffatomen, bevorzugt 18 C-Atomen, nach bekannten Methoden, wie z. B. thermische oder katalytische Polymerisation oder durch Copolymerisation in Gegenwart von polymerisationsfähigen Verbindungen, wie Styrol oder Homologen, Cyclopentadien u. a. hergestellt werden. Insbesondere werden Dimerfettsäuren mit einer Säurezahl von 150 bis 230 mgKOH/g verwendet.

Die Komponente A4) können auch Oxyalkylen-, vorzugsweise Oxäthylengruppen enthaltende Dicarbonsäuren sein mit der Formel

$$HOOC - CH_2 - [OR]_n - O - CH_2\ COOH$$

in der R ein verzweigter oder unverzweigter Alkylenrest mit 2 bis 5, vorzugsweise 2 C-Atomen (Äthylenrest) und n 0 oder eine ganze Zahl von 1 bis 300, vorzugsweise 1 bis 50 und insbesondere 1 bis 25, ist. Beispiele für diese Verbindungen sind: 3,6-Dioxaoctandisäure, 3,6,9-Trioxaundecandisäure, Polyglykoldisäure mit einer Molmasse von ca. 400 g/mol, bevorzugt von ca. 600 g/mol oder Mischungen aus diesen Säuren. Die Herstellung dieser Verbindungen ist bekannt (vgl. beispielsweise die DE-A 2 936 123) und erfolgt z. B. durch Oxidation von Polyglykolen in Gegenwart von Katalysatoren.

Die erfindungsgemäßen Epoxidverbindungen (Komponente A) werden in der Weise hergestellt, daß die Epoxide A1) mit den Polyalkylenmonoaminen A2) und A3) unter Rühren und im allgemeinen unter Erwärmen solange umgesetzt werden, bis das theoretisch berechnete Epoxidäquivalentgewicht erreicht ist, d. h. bis alle aktiven Wasserstoffe des Polyoxyalkylenmonoamins mit den im Überschuß vorhandenen Epoxidgruppen reagiert haben. Die Reaktionstemperaturen werden dabei im allgemeinen bei 25 bis 200 °C gehalten, vorzugsweise bei 50 bis 150 °C, insbesondere bei 80 bis 130 °C. Je nach Temperatur und eingesetzten Epoxiden und Aminen liegen in Reaktionszeiten allgemein zwischen wenigen Minuten und mehreren Stunden. In den meisten Fällen sind keine zusätzlichen Katalysatoren zur quantitativen Umsetzung der Amine mit den Epoxiden notwendig.

Zur Herstellung der Komponente (A) werden bevorzugt 20 bis 80 Gew.-% Komponente A2) und gegebenenfalls 20 bis 50 Gew.-% Komponente A3) und gegebenenfalls 0,1 bis 30 Gew.-% der Komponente A4), bezogen auf Komponente A1), eingesetzt.

Bei der Herstellung der erfindungsgemäßen Epoxidverbindungen (A) können auch verschiedene Epoxide (A1) als Mischung eingesetzt und direkt mit den Polyoxyalkylenmonoaminen (A2) und gegebenenfalls (A3) umgesetzt werden. Es kann aber auch ein gezielter, stufenweiser Aufbau mit verschiedenen Epoxiden nacheinander erfolgen der Art, daß zunächst ein Epoxid I (A1) mit einem Überschuß der Polyoxyalkylenmonoamine, z.B. 2 aktive Aminwasserstoffe pro Epoxidäquivalent, und nach vollständiger Umsetzung der Epoxidgruppen des Epoxids I ein weiteres Epoxid II (A1) im Überschuß mit den noch verfügbaren aktiven Aminwasserstoffen zur Reaktion gebracht wird.

Die gegebenenfalls durchzuführende Modifikation mit den Polycarbonsäuren A4) erfolgt hauptsächlich durch Umsetzung des Epoxids A1) mit der Säurekomponente A4), vor der Reaktion mit den Monoaminen A2) und A3) kann aber prinzipiell auch nach der Epoxid(A1)-Amin(A2 und A3)-Reaktion ausgeführt werden.

Die Reaktion der Polycarbonsäure (A4) mit den Epoxidverbindungen A1) oder dem Addukt aus A1), A2) und gegebenenfalls A3) kann bei höheren Temperaturen ohne Katalysatoren durchgeführt werden, läuft aber mit Katalysatoren wesentlich schneller ab und ergibt viel niedrigere Restsäurezahlen.

Für die gezielte und beschleunigte Umsetzung der Carboxylgruppen der Komponente A4) und der Epoxidgruppen der Komponente A1) bzw. der Umsetzungsprodukte der Komponente A1) mit den Komponenten A2) und A3) können als Katalysatoren beispielsweise eingesetzt werden: Natriumhydroxid, Kaliumhydroxid, Lithiumhydroxid, Natriumcarbonat, Chromverbindungen wie $CrCl_3$, $CrO_3$, Chromacetylacetonat, Imidazole, Imidazoline, quaternäre Ammonium- und Phosphoniumverbindungen wie Benzyltrimethylammoniumchlorid, Tetraäthylammoniumchlorid, Tetramethylammoniumchlorid, Benzyltrimethylammoniumhydroxid, Benzyldodecyldimethylammoniumchlorid, Methyltriphenylphosphoniumjodid, Triphenyl-(2,5-dihydroxyphenyl)-phosphoniumhydroxid, Äthyltriphenylphosphoniumacetat,

Triphenyläthylphosphoniumbromid sowie organische Phosphine wie Triphenylphosphin, Tricyclohexylphosphin, Tributylphosphin, Cyclohexyloctylphosphin, weiterhin aromatische Amine wie N,N-Dimethylanilin, N,N-Diäthylanilin, N,N-Dimethyl-p-toluidin, N,N-Diäthyl-p-toluidin sowie Amine wie Triäthylamin, Tributylamin, Benzyldimethylamin, Benzyldiäthylamin, Triäthylendiamin, N-Methylmorpholin, N-Methyl-piperidin, N-Alkylamine wie z. B. n-Butylamin und Alkanolamine wie Diäthanolamin, Dimethyläthanolamin, Diäthyläthanolamin, Dibutyläthanolamin, Triäthanolamin, Triisopropanolamin, Methyldiäthanolamin, Di-(3-phenoxy-2-hydroxy-propylalkylamine wie z. B. Di-(3-phenoxy-2-hydroxypropyl)-n-butylamin u. a.

Diese Katalysatoren werden im allgemeinen in Mengen von 0,01 bis 5 %, vorzugsweise 0,05 bis 2 %, bezogen auf die Summe von A1) bis A4), eingesetzt.

Als Komponente B) können für ein Zweikomponentenverfahren alle bekannten Aminhärtungsmittel für 1,2-Epoxide eingesetzt werden. Beispielhaft seien genannt: aliphatische Amine, wie die Polyalkylenpolyamine, Diäthylentriamin und Triäthylentetramin, Trimethylhexamethylendiamin, 2-Methyl-pentandiamin (Dytek A), Oxyalkylenpolyamine wie Polyoxypropylendi- und -triamin und 1,13-Diamino-4,7,10-trioxatridecan, cycloaliphatische Amine, wie Isophorondiamin (3,5,5-Trimethyl-3-aminomethyl-cyclohexylamin), 4,4'-Diaminodicyclohexylmethan, 3,3'-Dimethyl-4,4'-diamino-dicyclohexylmethan, N-Cyclohexyl-1,3-propandiamin, 1,2-Diaminocyclohexan, Piperazin, N-Aminoäthylpiperazin, TCD-Diamin (3(4), 8(9)-Bis(aminomethyl)-tricyclo[5.2.1.0$^{2,6}$]decan), araliphatische Amine, wie Xylylendiamine, aromatische Amine, wie Phenylendiamine, 4,4'-Diaminodiphenylmethan u. a., Addukthärter, die Umsetzungsprodukte von Epoxidverbindungen, insbesondere Glycidyläther des Bisphenol A und F, mit überschüssigem Amin sind, Polyamidoaminhärter, die durch Kondensation von Mono- und Polycarbonsäuren mit Polyaminen erhalten werden, insbesondere durch Kondensation von Dimerfettsäuren mit Polyalkylenpolyaminen, Mannichbasenhärter, die durch Umsetzung von ein- oder mehrwertigen Phenolen mit Aldehyden, insbesondere Formaldehyd, und Polyaminen erhalten werden.

Besonders bevorzugt als Härtungsmittel für die Zweikomponentenarbeitsweise sind Mannichbasen z. B. auf Basis von Phenol, Formaldehyd und m-Xylylendiamin sowie N-Aminoäthylpiperazin und Abmischungen von N-Aminoäthylpiperazin mit Nonylphenol.

Häufig ist es erwünscht mit Einkomponentensystemen zu arbeiten, da vom Verarbeiter keine Abmischung von Einzelkomponenten direkt vor dem Gebrauch des Systems, z. B. als Klebstoff, vorgenommen werden muß. Einkomponentensysteme erhält man durch Mischung der Epoxidkomponente (A) mit einem latenten Härtungsmittel. Solche Mischungen weisen im allgemeinen eine Lagerstabilität, von mehreren Wochen oder Monaten bei Raumtemperatur auf, d. h. die Viskosität bleibt in diesem Zeitraum konstant oder steigt nur geringfügig. Eines der weit verbreiteten latenten Härtungsmittel ist Dicyandiamid. Dicyandiamid (Cyanoguanidin, z.B. ®Dyhard 100 SKW) ist bei Raumtemperatur selbst kein Härtungsmittel. Es zersetzt sich bei höheren Temperaturen und bewirkt über reaktive Spaltprodukte eine Härtung des Epoxidsystems. Flexible Einkomponenten-Epoxidharzsysteme werden durch Dispergierung des latenten Härters, beispielsweise des Dicyandiamids als Komponente (B) in der flexibilisierten Epoxidharzkomponente (A) ggf. mit Zusatzstoffen (C), wie beispielsweise eines Thixotropiermittels hergestellt.

Die Härter (B) werden im allgemeinen in Mengen von 0,01 bis 50, vorzugsweise von 1 bis 40 Gew.-%, bezogen auf die Komponente (A) eingesetzt. Die Härtung mit Dicyandiamid erfolgt im allgemeinen in Mengen von 0,01 bis 20, vorzugsweise 0,5 bis 15 Gew.-%, bezogen auf die Komponente (A). Gegebenenfalls kann ein Beschleuniger in einer Menge von 0,01 bis 10, vorzugsweise mit 0,1 bis 7 Gew.-%, bezogen auf die Komponente (A) (vgl. Zusatzstoffe (C), Beschleuniger) zugesetzt werden.

Bei der Einarbeitung der Härter (B) sowie gegebenenfalls bei der Zugabe der Beschleuniger (vgl. Zusatzstoffe (C), Beschleuniger) muß die Temperatur unterhalb der Reaktionstemperatur des entsprechenden Harz/Härtersystems liegen. Dabei kann es notwendig werden, bei dem Dispergiervorgang das Reaktionsgemisch zu kühlen.

Mit den für das Zweikomponentenverfahren angegebenen Polyaminhärtern ist es prinzipiell möglich, die Komponenten (A) und (B) bei Raumtemperatur zu härten. Bei diesen relativ niedrigen Temperaturen werden aber häufig keine optimalen Eigenschaften des gehärteten Systems erzielt. Für das Einkomponentensystem mit latenten Härtern, wie z. B. Dicyandiamid, ist ohnehin eine erhöhte Temperatur zur Initiierung der Vernetzungsreaktion erforderlich. Die Härtungstemperatur der erfindungsgemäßen Zusammensetzung liegt im allgemeinen bei 5 bis 260 °C, vorzugsweise bei 120 bis 200 °C. Die Härtungszeit bei Temperaturen von 120 bis 200 °C liegt im allgemeinen bei 10 bis 200 Minuten.

Die erfindungsgemäße Zusammensetzung kann neben den Komponenten (A) und (B) noch weitere übliche Zusatzstoffe enthalten wie beispielsweise Beschleuniger bzw. Härtungskatalysatoren, weitere Härter und zusätzliche härtbare Harze oder Extenderharze sowie die üblichen Lackadditive wie Pigmente, Pigmentpasten, Farbstoffe, Antioxidantien, Verlauf- bzw. Verdickungsmittel (Thixotropierungsmittel), Entschäumer und/oder Netzmittel, Reaktiwerdünner, Füllstoffe, Weichmacher, flammhemmende Stoffe und dgl. Diese Additive können den härtbaren Mischungen gegebenenfalls längere Zeit vor oder erst unmittelbar vor der Verarbeitung zugegeben werden.

Als Beschleuniger, insbesondere für die Härtung nach dem Zweikomponentenverfahren mit Aminhärtungsmitteln, können beispielsweise Phenole und Alkylphenole mit 1 - 12 C-Atomen in der Alkylgruppe, Kresol, die verschiedenen Xylenole, Nonylphenol, Polyphenole wie Bisphenol A und F, OH-gruppenhaltige aromatische Carbonsäuren wie Salicylsäure, m-Hydroxybenzoesäure, p-Hydroxybenzoesäure sowie tertiäre Amine, wie Benzyldimethylamin,

1,3,5-Tris(dimethylamino)phenol und dergleichen eingesetzt werden.

Häufig ist es erforderlich, auch die Härtung im Einkomponentenverfahren mit latenten Härtungsmitteln, wie z. B. Dicyandiamid, zu beschleunigen. Als geeignete Beschleuniger sind u. a. zu nennen: Tertiäre Amine, wie z. B. Benzyldimethylamin, 1,4-Diazabicyclo[2.2.2]octan (Dabco), N,N-Dimethyläthanolamin, 2,4-Dimethylpyridin, 4-Dimethylaminopyridin, substituierte Harnstoffe, $BF_3$-Aminkomplexe, quaternäre Ammoniumverbindungen, wie z. B. Benzyltrimethylammoniumchlorid, Tetramethylammoniumchlorid, Tetraäthylammoniumchlorid, Benzyldodecyldiäthylammoniumchlorid und insbesondere Imidazoline und Imidazole.

Im einzelnen kommen als Imidazoline bzw. Imidazole beispielsweise folgende Verbindungen in Frage: 2-Methyl-imidazolin, 2-Äthyl-4-methyl-imidazolin, 2-Phenylimidazolin, 2-Undecylimidazolin, 2-Heptadecylimidazolin, 2-Äthylimidazolin, 2-Isopropylimidazolin, 2,4-Dimethyl-imidazolin, 2-Phenyl-4-methyl-imidazolin, 2-Benzylimidazolin, 2-(o-Tolyl)-imidazolin, 2-(p-Tolyl)-imidazolin, Tetramethylenbis-imidazolin, 1,1,3-Trimethyl-1,4-tetramethylen-bis-imidazolin, 1,3,3-Trimethyl-1,4-tetramethylen-bis-imidazolin, 1,1,3-Trimethyl-1,4-tetramethylen-bis-4-methylimidazolin, 1,2-Phenylen-bis-imidazolin, 1,3-Phenylen-bis-imidazolin, 1,4-Phenylen-bis-imidazolin, 1,4-Phenylen-bis-4-methylimidazolin. Es können auch beliebige Mischungen der Imidazoline eingesetzt werden.

Geeignete Imidazole sind Imidazol selbst; 1-Methyl-imidazol, 2-Methyl-imidazol, 4-Methyl-imidazol, 5-Methylimidazol, 1-Äthyl-imidazol, 2-Äthyl-imidazol, 1-Propyl-imidazol, 2-Propyl-imidazol, 2-Isopropyl-imidazol, 1-Butyl-imidazol, 2-Octyl-imidazol, 2-Undecyl-imidazol, 2-Heptadecyl-imidazol, 2-Cyclohexyl-imidazol, 1-Phenylimidazol, 2-Phenylimidazol, 2,4-Dimethyl-imidazol, 1,2-Dimethyl-imidazol, 4,5-Dimethyl-imidazol, 2-Äthyl-4-methyl-imidazol, 1-Äthyl-2-methyl-imidazol, 1-Methyl-2-isopropyl-imidazol, 4-Butyl-5-äthyl-imidazol, 2-Cyclohexyl-4-methyl-imidazol, 1-Benzyl-2-methyl-imidazol; 2-Phenyl-4-methyl-imidazol, 4,5-Diphenyl-imidazol, 2-Äthyl-4-phenyl-imidazol, 2,4,5-Trimethyl-imidazol, 2,4,5-Tricyclohexyl-imidazol, 1,2,4,5-Tetramethylimidazol sowie Benzimidazole und deren Derivate. Es können auch beliebige Mischungen der Imidazole eingesetzt werden.

Als Verlaufmittel können zum Beispiel Acetale, wie Polyvinylformal, Polyvinylacetal, Polyvinylbutyral, Polyvinylacetobutyral u. a. Polyäthylen- und Polypropylenglykole, Siliconharze, Gemische von Zinkseifen, von Fettsäuren und aromatischen Carbonsäuren, insbesondere handelsübliche Produkte auf Basis von Polyacrylaten eingesetzt werden. Die Verlaufmittel können auch der Komponente A) in Mengen von 0,1 - 4 Gew.-%, vorzugsweise 0,2 - 2,0 Gew.-% zugesetzt werden.

Als Haftvermittler und Hydrophobierungsmittel können u. a. Silane eingesetzt werden. Diese können sowohl mit dem anorganischen Untergrund als auch mit dem organischen Polymeren (Klebstoff, Beschichtungsmasse oder dergleichen) unter Ausbildung von festen Bindungen reagieren. Durch die Haftverbesserung können die mechanischen Werte verbessert werden, insbesondere nach Feuchtigkeitsbeanspruchung. Entsprechende Produkte werden z. B. unter der Bezeichnung Dynasylan® von Hüls AG bzw. als Silane von Degussa AG angeboten.

Die Farbstoffe und Pigmente können sowohl anorganischer als auch organischer Natur sein. Beispielsweise seien genannt Titandioxid, Zinkoxid, Ruß, Leitfähigkeitsruß wie z. B. ®Printex XE 2 der Degussa AG. Die organischen Farbstoffe und Pigmente sind so auszuwählen, daß sie bei den Härtungstemperaturen stabil sind und zu keinen untolerierbaren Farbtonverschiebungen führen.

Geeignete Füllstoffe sind zum Beispiel Quarzmehl, Silikate, Kreide, Gips, Kaolin, Glimmer, Schwerspat, organische Füllstoffe wie z. B. Polyamidpulver und dergleichen. Als Thixotropier- und Verdickungsmittel können beispielsweise Aerosil® (hochdisperses Siliciumdioxid z. B. die Typen 150, 200, R 202, R 805 der Degussa), Bentonit-Typen (z. B. ®Sylodex 24 von Grace) sowie Bentone (Trademark of NL Chemicals) verwendet werden.

Die Einarbeitung der Zusatz- und Füllstoffe erfolgt im allgemeinen mit Zwangsmischern, wie z. B. Dissolvern und Knetern. Auch hier kann es notwendig sein, durch eine Kühlung des formulierten erfindungsgemäßen Harz/Härter-Systems eine vorzeitige Reaktion der Komponenten zu vermeiden.

Die erfindungsgemäße Epoxidharz-Zusammensetzung kann Verwendung finden zum Beschichten und Verkleben der mannigfaltigsten Werkstoffe, zum Beispiel Metalle, Leichtmetalle, aber auch nichtmetallische Werkstoffe wie Keramik, Glas, Leder, Gummi, Holz, Kunststoff, u.a.. Die Verklebungen können mit denselben oder mit anderen Materialien erfolgen.

Bevorzugt ist die Verwendung der Zusammensetzung als Konstruktionskleber für die Automobilindustrie.

Das Auftragen auf die Substrate erfolgt nach den bekannten Verfahren, wie z.B. Streichen, Walzen, Ablegen als Kleberaupe aus geeigneten Aggregaten.

**Beispiele**

**I. Herstellung der Epoxidverbindungen (Komponente A)**

**Beispiel 1 (Vergleich)**

Zu 100 Gewichtsteilen eines flüssigen Epoxidharzes auf Bisphenol A-Basis mit einem Epoxidäquivalent (EV)

von 183 werden in einem Vierhalskolben mit Rührer, Thermometer und Kühler unter Stickstoff 70 Gewichtsteile ®Jeffamine M 1000[1)] gegeben. Dann wird auf 90 °C geheizt und solange bei dieser Temperatur gehalten (ca. 5 Stunden) bis der EV konstant bleibt. Nach einer Stunde Nachhaltezeit wird gekühlt und der Kolben entleert. Das Epoxidharz hat folgende Kenndaten:

| | |
|---|---|
| Epoxidäquivalent | 405 |
| Aminzahl | 22,4 mg KOH/g |
| Viskosität 25 °C | 7500 mPa.s |

**Beispiel 2 (Vergleich)**

Analog Beispiel 1 werden 100 Gewichtsteile des flüssigen Epoxidharzes auf Bisphenol A-Basis mit einem EV von 183 mit 43,5 Gewichtsteilen ®Jeffamine M 600[2)] umgesetzt. Das Epoxidharz hat folgende Kenndaten:

| | |
|---|---|
| Epoxidäquivalent | 361 |
| Aminzahl | 31,8 mg KOH/g |
| Viskosität 25 °C | 44260 mPa.s |

Anmerkungen:

1) ®Jeffamine M 1000 hat nach Herstellermerkblatt eine Molmasse von 1000 g/mol und ein PO/EO-Verhältnis von 3/19.

2) ®Jeffamine M 600 hat nach Herstellermerkblatt eine Molmasse von 600 g/mol und ein PO/EO-Verhältnis von 9/1.

**Beispiel 3**

Analog Beispiel 1 werden 100 Gewichtsteile des flüssigen Epoxidharzes auf Bisphenol A-Basis mit einem EV von 183 mit 48,3 Gewichtsteilen ®Jeffamine M 600 und 24,1 Gewichtsteilen ®Jeffamine M 1000 umgesetzt. Das Epoxidharz hat folgende Kenndaten:

| | |
|---|---|
| Epoxidäquivalent | 525 |
| Aminzahl | 36,9 mg KOH/g |
| Viskosität 25 °C | 42170 mPa.s |

**Beispiel 4 (Vergleich)**

Zu 95 Gewichtsteilen eines flüssigen Epoxidharzes auf Bisphenol A-Basis mit einem Epoxidäquivalent von 183 werden in einem Vierhalskolben mit Rührer, Thermometer und Kühler unter Stickstoff 5 Gewichtsteile der Dimerfettsäure Pripol 1004 (C 44 Dimeracid von Unichema international) gegeben. Das Reaktionsgemisch wird auf 140 °C erwärmt und 0,1 Gewichtsteile Triäthanolamin zugesetzt. Nach einer Stunde liegt die Säurezahl bei 0,1 mgKOH/g. Es wird unter Stickstoff auf Raumtemperatur abgekühlt und der Kolben entleert. Das Epoxidharz hat folgende Kenndaten:

| | |
|---|---|
| Säurezahl | 0,1 mg KOH/g |
| Epoxidäquivalent | 199 |
| Viskosität 25 °C | 12100 mPa.s |

**Beispiel 5**

Analog Beispiel 1 werden 100 Gewichtsteile des flüssigen Epoxidharzes aus Beispiel 4 mit einem EV von 199 mit 36,2 Gewichtsteilen ®Jeffamine M 600 umgesetzt. Das Epoxidharz hat folgende Kenndaten:

| | |
|---|---|
| Epoxidäquivalent | 366 |
| Viskosität 25 °C | 47620 mPa.s |

**Beispiel 6**

80 Gewichtsteile des Epoxidharzes aus Beispiel 5 werden mit 20 Gewichtsteilen eines Polyoxypropylenglykoldiglycidyläthers (Hoechst Beckopox EP 075) vermischt. Die Epoxidharzmischung hat einen EV von 361.

## II. Herstellung von Einkomponenten-Klebstoffen

Die Epoxidharzkomponente A wird auf 60 °C erwärmt und das Dicyandiamid (Dyhard® 100 SKW Trostberg) in diesem Harz mit einem Dissolver mit 10000 Umdrehungen/Minute 15 Minuten lang dispergiert. Anschließend wird das ®Aerosil R202 portionsweise zugegeben und je nach der Viskosität der Komponente A die erfindungsgemäße Mischung mit 250 bis 4000 Umdrehungen/-Minute mit dem Dissolver homogenisiert.

Aus den Beispielen I. 1, 2, 3, 5 und 6 der Epoxidverbindungen (Komponente A) werden die Klebstoff-Formulierungen II. 1, 2, 3, 4 und 5 angefertigt (siehe Tabelle 1).

## III. Prüfverfahren

### III.1. Vorbereitung der Prüfkörper zur Messung der Zugscherfestigkeit

Die Zugscherprüfkörper werden nach DIN 53 281 Teil 2 aus Stahlblech Qualität ST 1405 von 0,75 mm Dicke hergestellt. Die Stahlstreifen werden im nicht entfetteten Zustand auf einer Fläche von 400 $mm^2$ überlappend verklebt. Mit Abstandshaltern aus PTFE-Folie wird eine definierte Klebstoffschicht von 0,2 mm eingestellt. Die Aushärtung des Klebstoffes erfolgt 30 Minuten bei 180 °C. Nach dem Erkalten der Prüfkörper wird seitlich ausgetretener Klebstoff abgeschnitten.

### 2. Messung der Zugscherfestigkeit

Die Zugscherfestigkeit der nach III.1. angefertigten Prüfkörper wird nach DIN 53 283 als Mittelwert von 5 Einzelwerten auf einer Zugprüfmaschine nach DIN 51 221, Teil 2 der Firma Zwick gemessen.

### 3. Vorbereitung der Prüfkörper für den Salzsprühtest

Die nach III.1. vorbereiteten Prüfkörper werden ohne Entfettung mit einem Zweikomponenten Epoxidharz-Primer zweimal grundiert. Dabei wird die gesamte Oberfläche einschließlich der Überlappungszone beschichtet. Nach jeder Behandlung wird abgelüftet und 10 Minuten bei 120 °C eingebrannt.

### 4. Salzsprühtest

Die nach III.3. vorbereiteten Prüfbleche werden z. B. 500 Stunden in einem Salzsprühtestgerät nach DIN 50 021 gelagert. Danach werden die Prüfkörper 3 Stunden bei Raumtemperatur getrocknet und die Zugscherfestigkeit nach III.2. gemessen.

$$\text{Restfestigkeit} = \frac{\text{Zugscherfestigkeit nach z. B. 500 Stunden Salzsprühtest}}{\text{Zugscherfestigkeit vor dem Salzsprühtest}} \times 100\%$$

### 5. Vorbereitung der Prüfkörper zur Messung des Schälwiderstandes

Die Prüfkörper werden nach DIN 53 281, Teil 2 aus Stahlblech Qualität ST 1203 von 0,5 mm Dicke hergestellt. Die Stahlstreifen werden mit Aceton entfettet und mit Hilfe eines Schraubstocks zu einem Winkel von 90° gebogen. Der nach II. hergestellte Klebstoff wird mit einem Filmziehgerät in einer Schicht von 0,1 mm auf die Außenfläche des längeren Schenkels aufgetragen. Der so mit Klebstoff beschichtete Metallstreifen wird nun mit einem weiteren nicht mit Klebstoff beschichteten Metallstreifen zusammengefügt, daß sich ein klebefugensymmetrischer T-förmiger Prüfkörper mit einer Klebefläche von 185 x 30 mm ergibt. Die Aushärtung des Klebstoffes erfolgt in 30 Minuten bei 180 °C. Nach dem Abkühlen wird seitlich ausgetretener Klebstoff abgeschnitten.

### 6. Messung des Schälwiderstandes

Der Schälwiderstand der nach III. 5. hergestellten Prüfkörper wird nach DIN 53 282 als Mittelwert aus 5 Einzelwerten auf einer Zugprüfmaschine nach DIN 51 221, Teil 3 der Firma Zwick bestimmt.

Tabelle 1

Zusammensetzung der Klebstoffe

| Beispiel II | | 1 (Vergleich) | 2 (Vergleich) | 3 | 4 | 5 |
|---|---|---|---|---|---|---|
| Epoxidharz-Komponente A Beispiel I | | 1 | 2 | 3 | 5 | 6 |
| | GT | 100 | 100 | 100 | 100 | 100 |
| ®Dyhard 100 (Dicyandiamid der SKW Trostberg) | GT | 10 | 10 | 10 | 10 | 10 |
| ®Aerosil R202 (Degussa AG) | GT | 4 | 4 | 4 | 4 | 4 |

Tabelle 2

| Beispiel | Zugscherfestigkeit nach DIN 53 283 $N/mm^2$ | Schälwiderstand nach DIN 53 282 N/mm | Restfestigkeit nach Salzsprühtest (DIN 50 021) nach 500 Stunden % |
|---|---|---|---|
| II.1. (Vergleich) | 16,0 | 3,7 | 1,3 |
| II.2. | 16,1 | 8,5 | 100,0 |
| II.3. | 16,1 | 6,8 | 54,5 |
| II.5. | 16,6 | 7,8 | 97,6 |
| II.6. | 16,5 | 7,2 | 86,7 |

## Patentansprüche

1. Epoxidharz-Zusammensetzung enthaltend

   (A) Verbindungen, die mindestens zwei 1,2-Epoxidgruppen enthalten, die Umsetzungsprodukte sind aus

   A1) Verbindungen mit mindestens zwei 1,2-Epoxidgruppen pro Molekül, sowie eine Mischung aus
   A2) Polyoxyalkylenmonoaminen mit einer Molmasse von 500 bis 700 g/mol mit
   A3) Polyoxyalkylenmonoaminen mit einer Molmasse von 900 bis 5000 g/mol, wobei die Oxyalkylengruppen in A2) und A3) aus Oxypropylen- und Oxyäthylengruppen, sowie deren Mischungen ausgewählt sind, und/oder
   A4) Polycarbonsäuren,

   (B) Härtungsmitteln,und

   (C) gegebenenfalls üblichen Zusätzen.

2. Zusammensetzung nach Anspruch 1, **dadurch gekennzeichnet, daß** die Verbindungen A1) Epoxidäquivalentgewichte von 150 bis 250 g/mol aufweisen.

3. Zusammensetzung nach Anspruch 1 oder 2, **dadurch gekennzeichnet, daß** die Polyoxyalkylenmonoamine A2) und A3) die allgemeine Formel

$$CH_3\text{-}(O\text{-}CH_2\text{-}CH_2)_y\text{-}[O\text{-}CH_2\text{-}CH(CH_3)]_x\text{-}NH_2$$

   haben in der unabhängig voneinander y 0 bis 10 und x 1 bis 41 ist.

4. Zusammensetzung nach mindestens einem der Ansprüche 1 bis 3, **dadurch gekennzeichnet, daß** die Komponente A2) ein Polyoxyalkylenmonoamin der Formel

$$CH_3\text{-}O\text{-}CH_2\text{-}CH_2\text{-}[O\text{-}CH_2\text{-}CH\text{-}(CH_3)]_9\text{-}NH_2$$

   ist.

5. Zusammensetzung nach mindestens einem der Ansprüche 1 bis 4, **dadurch gekennzeichnet, daß** die Komponente (A2) eine Molmasse von 500 bis 700, vorzugsweise 600 g/mol, aufweist.

6. Zusammensetzung nach mindestens einem der Ansprüche 1 bis 5, **dadurch gekennzeichnet, daß** die Komponente (A4) eine Dimerfettsäure mit einer Säurezahl von 150 bis 230 mg KOH/g ist.

7. Zusammensetzung nach mindestens einem der Ansprüche 1 bis 6, **dadurch gekennzeichnet, daß** die Komponente (A4) eine Dicarbonsäure der Formel

$$HOOC - CH_2 - [OR]_n - O - CH_2 - COOH \qquad (1)$$

   ist, in der bedeuten
   R = Alkylenrest mit 2 bis 5 C-Atomen und
   n = 0 oder eine ganze Zahl von 1 bis 300.

8. Zusammensetzung nach Anspruch 7, **dadurch gekennzeichnet, daß** R in der Formel (1) einen Äthylenrest und n 1 bis 50 bedeuten.

9. Zusammensetzung nach Anspruch 7 und 8, **dadurch gekennzeichnet, daß** die Komponente (A4) Polyglykolsäure mit einer mittleren Molmasse von 600 g/mol ist.

**10.** Zusammensetzung nach mindestens einem der Ansprüche 1 bis 9, **dadurch gekennzeichnet, daß** 20 bis 80 Gew.-% Komponente A2) und gegebenenfalls 20 bis 50 Gew.-% Komponente A3) und gegebenenfalls 0,1 bis 30 Gew.-% der Komponente A4), bezogen auf Komponente A1), eingesetzt werden.

**11.** Zusammensetzung nach mindestens einem der Ansprüche 1 bis 10, **dadurch gekennzeichnet, daß** das Härtungsmittel ein latentes Härtungsmittel ist.

**12.** Zusammensetzung nach mindestens einem der Ansprüche 1 bis 11, **dadurch gekennzeichnet, daß** das Härtungsmittel Dicyandiamid ist.

**13.** Zusammensetzung nach mindestens einem der Ansprüche 1 bis 12, **dadurch gekennzeichnet, daß** das Härtungsmittel N-Aminoäthylpiperazin ist.

**14.** Zusammensetzung nach mindestens einem der Ansprüche 1 bis 13, **dadurch gekennzeichnet, daß** das Härtungsmittel eine Mischung aus N-Aminoäthylpiperazin und Nonylphenol ist.

**15.** Zusammensetzung nach mindestens einem der Ansprüche 1 bis 14, **dadurch gekennzeichnet, daß** sie zusätzlich einen Beschleuniger enthält.

**16.** Verwendung der Zusammensetzung nach mindestens einem der Ansprüche 1 bis 15 als Klebstoff, insbesondere als Einkomponenten-Klebstoff.

**17.** Verwendung der Zusammensetzung nach Anspruch 1 bis 15 als Konstruktionskleber für die Automobilindustrie.

## Claims

**1.** An epoxy resin composition comprising

(A)compounds which contain at least two 1,2-epoxide groups and are reaction products of

A1) compounds containing at least two 1,2-epoxide groups per molecule, and a mixture of
A2) polyoxyalkylenemonoamines having a molar mass of from 500 to 700 g/mol with
A3) polyoxyalkylenemonoamines having a molar mass of from 900 to 5000 g/mol, where the oxyalkylene groups in A2) and A3) are selected from among oxypropylene and oxyethylene groups and mixtures thereof, and/or
A4) polycarboxylic acids

(B)hardeners and

(C) if desired, customary additives.

**2.** A composition as claimed in claim 1, wherein the compounds A1) have epoxide equivalent weights of from 150 to 250 g/mol.

**3.** A composition as claimed in claim 1 or 2, wherein the polyoxyalkylenemonoamines A2) and A3) have the formula

$$CH_3\text{-}(O\text{-}CH_2\text{-}CH_2)_y\text{-}[O\text{-}CH_2\text{-}CH(CH_3)]_x\text{-}NH_2,$$

where, independently of one another, y is from 0 to 10 and x is from 1 to 41.

**4.** A composition as claimed in at least one of claims 1 to 3, wherein the component A2) is a polyoxyalkylenemonoamine of the formula

$$CH_3\text{-}O\text{-}CH_2\text{-}CH_2\text{-}[O\text{-}CH_2\text{-}CH\text{-}(CH_3)]_9\text{-}NH_2.$$

5. A composition as claimed in at least one of claims 1 to 4, wherein the component A2) has a molar mass of from 500 to 700 g/mol, preferably 600 g/mol.

6. A composition as claimed in at least one of claims 1 to 5, wherein the component A4) is a dimeric fatty acid having an acid number of from 150 to 230 mg KOH/g.

7. A composition as claimed in at least one of claims 1 to 6, wherein the component A4) is a dicarboxylic acid of the formula

$$HOOC\text{-}CH_2\text{-}[OR]_n\text{-}O\text{-}CH_2\text{-}COOH \quad (1),$$

where

R is an alkylene radical having from 2 to 5 carbon atoms and

n is 0 or an integer from 1 to 300.

8. A composition as claimed in claim 7, wherein R in formula (1) is an ethylene radical and n is from 1 to 50.

9. A composition as claimed in claim 7 or 8, wherein the component A4) is polyglycolic acid having an average molar mass of 600 g/mol.

10. A composition as claimed in at least one of claims 1 to 9, wherein the amounts used are from 20 to 80 % by weight of component A2) and, if desired, from 20 to 50 % by weight of component A3) and, if desired, from 0.1 to 30 % by weight of the component A4), based on component A1).

11. A composition as claimed in at least one of claims 1 to 10, wherein the hardener is a latent hardener.

12. A composition as claimed in at least one of claims 1 to 11, wherein the hardener is dicyandiamide.

13. A composition as claimed in at least one of claims 1 to 12, wherein the hardener is N-aminoethylpiperazine.

14. A composition as claimed in at least one of claims 1 to 13, wherein the hardener is a mixture of N-aminoethylpiperazine and nonylphenol.

15. A composition as claimed in at least one of claims 1 to 14 which additionally contains an accelerator.

16. Use of the composition as claimed in at least one of claims 1 to 15 as an adhesive, in particular as a single-component adhesive.

17. Use of the composition as claimed in any of claims 1 to 15 as a structural adhesive for the automobile industry.

## Revendications

1. Composition de résine époxyde contenant

((A) des composés qui contiennent au moins deux groupes 1,2-époxy, qui sont des produits de réactions de

A1) composés ayant au moins deux groupes 1,2-époxy par molécule, ainsi qu'un mélange de
A2) polyoxyalkylène monoamines ayant une masse molaire de 500 à 700 g/mole sur des
A3) polyoxyalkylène monoamines ayant une masse molaire de 900 à 5000 g/mole, les groupes oxyalkylène dans A2) et A3) étant pris parmi les groupes oxypropylène et oxéthylène, ainsi que leurs mélanges, et/ou des
A4) acides polycarboxyliques,

(B) des agents durcisseurs, et
(C) éventuellement des additifs usuels.

**2.** Composition selon la revendication 1, **caractérisée en ce que** les composés A1) présentent des poids équivalents d'époxyde de 150 à 250 g/mole.

**3.** Composition selon la revendication 1 ou 2, **caractérisée en ce que** les polyoxyalkylène monoamines A2) et A3) répondent à la formule générale

$$CH_3\text{-}(O\text{-}CH_2\text{-}CH_2)_y\text{-}[O\text{-}CH_2\text{-}CH(CH_3)]_xNH_2$$

dans laquelle, indépendamment l'un de l'autre, y vaut 0 à 10 et x vaut 1 à 41.

**4.** Composition selon au moins l'une des revendications 1 à 3, **caractérisée en ce que** le constituant A2) est une les polyoxyalkylène monoamine de formule

$$CH_3\text{-}O\text{-}CH_2\text{-}CH_2\text{-}[O\text{-}CH_2\text{-}CH(CH_3)]_9NH_2.$$

**5.** Composition selon au moins l'une des revendications 1 à 4, **caractérisée en ce que** le constituant A2) présente une masse molaire de 500 à 700, de préférence de 600 g/mole.

**6.** Composition selon au moins l'une des revendications 1 à 5, **caractérisée en ce que** le constituant (A4) est un acide gras dimère ayant un indice d'acide de 150 à 230 mg KOH/g.

**7.** Composition selon au moins l'une des revendications 1 à 6, **caractérisée en ce que** le constituant (A4) est un acide dicarboxylique de formule

$$HOOC\text{-}CH_2\text{-}\ [OR]_n\text{-}O\text{-}CH_2COOH$$

dans laquelle
R = un reste alkylène présentant 2 à 5 atomes et
n = 0 ou est un entier de 1 à 300.

**8.** Composition selon la revendication 7, **caractérisée en ce que** R dans la formule (1) représentent un reste éthylène et n va de 1 à 50.

**9.** Composition selon la revendication 7 ou 8, **caractérisée en ce que** le constituant (A4) est un acide polyglycolique ayant une masse molaire de 600 g/mole.

**10.** Composition selon au moins l'une des revendications 1 à 9, **caractérisée en ce qu'**on utilise de 20 à 80 % en masse de constituant A2) et éventuellement de 20 à 50 % en masse de constituant A3) et éventuellement de 0,1 à 30 % en masse du constituant A4), par rapport au constituant A1).

**11.** Composition selon au moins l'une des revendications 1 à 10, **caractérisée en ce que** l'agent durcisseur est un agent durcisseur latent.

**12.** Composition selon au moins l'une des revendications 1 à 11, **caractérisée en ce que** l'agent durcisseur est le dicyanodiamide.

**13.** Composition selon au moins l'une des revendications 1 à 12, **caractérisée en ce que** l'agent durcisseur est la N-aminoéthylpipérazine.

**14.** Composition selon au moins l'une des revendications 1 à 13, **caractérisée en ce que** l'agent durcisseur est un mélange de N-aminoéthylpipérazine et de nonylphénol.

**15.** Composition selon au moins l'une des revendications 1 à 14, **caractérisée en ce qu'**elle contient de plus un accélérateur.

**16.** Utilisation de la composition selon au moins l'une des revendications 1 à 15 en tant qu'adhésif, en particulier en tant qu'adhésif à un composant.

**17.** Utilisation de la composition selon au moins l'une des revendications 1 à 15 en tant qu'adhésif de construction dans l'industrie automobile.